**Europäisches Patentamt**

**European Patent Office**

**Office européen des brevets**

(19)

(11) Veröffentlichungsnummer : **0 102 403**
**B1**

(12) **EUROPÄISCHE PATENTSCHRIFT**

(45) Veröffentlichungstag der Patentschrift :
05.03.86

(21) Anmeldenummer : 82108086.8

(22) Anmeldetag : 02.09.82

(51) Int. Cl.⁴ : **C 01 F   7/06**

(54) Verbessertes Verfahren zur Gewinnung von Tonerde.

(43) Veröffentlichungstag der Anmeldung :
**14.03.84 Patentblatt 84/11**

(45) Bekanntmachung des Hinweises auf die Patenterteilung : **05.03.86 Patentblatt 86/10**

(84) Benannte Vertragsstaaten :
**DE FR IT**

(56) Entgegenhaltungen :
**FR-A- 1 054 369**
**FR-A- 1 391 596**
**FR-A- 2 318 113**
**FR-A- 2 463 098**
**US-A- 3 486 850**
**US-A- 3 545 923**
**US-A- 4 305 913**

(73) Patentinhaber : **Alcoa Chemie GmbH**
**Giulinistrasse 2**
**D-6700 Ludwigshafen (DE)**

(72) Erfinder : **Tielens, Arthur J.**
**Blumenfeldstrasse 51**
**CH-8046 Zürich (CH)**
Erfinder : **Pohland, Horst, Dr. Dipl.-Chem.**
**Schwetzinger-Strasse 39**
**D-6703 Limburgerhof/Pfalz (DE)**

(74) Vertreter : **Benatzky, Erika, Dr.**
**Giulinistrasse 2**
**D-6700 Ludwigshafen/Rh. (DE)**

## Beschreibung

Gegenstand der vorliegenden Erfindung ist ein verbessertes Verfahren zur Gewinnung von Tonerde ($Al_2O_3$) aus Bauxit nach dem Bayer-Verfahren und anschließende Kalzination, bei dem sowohl die Eigenschaften der groben Aluminiumoxid-Kristalle als auch die Ausbeute, bezogen auf die Zeit, verbessert werden. Auch kann die zur Ausfällung einer bestimmten Aluminiumhydroxidmenge erforderliche Impfkristallmenge herabgesetzt werden.

Beim europäischen Bayer-Verfahren wird bekanntlich gemahlener Bauxit mit einer im Kreislauf geführten, Natriumhydroxid und Natriumaluminat enthaltenden Lauge im Autoklav erhitzt, wobei Tonerde in Lösung geht und Rotschlamm in ungelöster Form zurückbleibt. Die aus dem Autoklav kommende Aufschlußlauge wird mit Waschlauge und/oder ausgerührter Natriumaluminatlauge verdünnt und der Rotschlamm von der Lauge getrennt. Aus der abgetrennten Lauge wird nach der Abkühlung und Impfung mit Aluminium-Hydrat-Kristallen das Tonerde-Hydrat bei Temperaturen von 50 bis 70 °C abgeschieden.

Ein wesentliches Merkmal dieses europäischen Verfahrens besteht nun darin, daß zum Aufschluß konzentrierte Natriumhydroxid-Lösung (280 bis 450 g/l, ber. als $Na_2CO_3$) eingesetzt wird und das erzeugte Aluminiumoxid-Hydrat nach Verdünnung bei tieferen Temperaturen ausgerührt wird. Ein unter den gegebenen Bedingungen ausgerührtes Aluminiumoxid-Hydrat fällt in feinkristalliner Form an. Ein Teil dieses Produktes wird zu Tonerde kalziniert und ein anderer Teil zum Impfen verwendet. Wegen beachtlicher Staubverluste bei der Kalzination, beim Transport und bei der Elektrolyse ist ein derartiges Produkt heute jedoch unerwünscht. Das feinkörnige Aluminiumoxid nimmt ferner das während der Elektrolyse entstehende Fluor-Gas nur schlecht auf, während grobkörniges Aluminiumoxid dazu sehr gut in der Lage ist. Letzteres hat zur Folge, daß die Verluste an Fluor-Gas reduziert werden und beträchtlich weniger Fluor-Gas in die Atmosphäre übergeht, was wiederum die Einhaltung der immer strenger werdenden Umweltschutz-Bestimmungen erleichtert. Außerdem wird in verschiedenen Anwendungsgebieten, z. B. Verwendung als Schleifmittel und Katalysator, dem Einsatz von grobkristallinem Aluminiumoxid in vielen Fällen der Vorzug gegeben.

Im Gegensatz hierzu liegt beim amerikanischen Bayer-Verfahren die Konzentration des Natriumhydroxids in der Aufschlußlauge bei etwa 160 bis 225 g/l, also wesentlich unterhalb der Konzentration in europäischen Aufschlußlaugen. Jedoch werden bei diesem Verfahren Aluminiumoxid-Hydrate unterschiedlicher Korngröße erzeugt, wobei die groben Kristalle als Produkt abgezogen und kalziniert werden, während die feinen und die mittelgroben Kristalle als Impfkristalle Verwendung finden.

Wegen der unterschiedlichen Bauxite, die bei den eben beschriebenen Varianten des Bayer-Verfahrens aufgeschlossen werden, läßt sich jedoch das amerikanische Bayer-Verfahren nicht ohne weiteres auf die in Europa verarbeiteten Bauxite übertragen. Außerdem wird bei dem amerikanischen Verfahren bei der Erzeugung der Aluminiumoxid-Hydrate unterschiedlicher Korngröße mit verdünnten Laugen gearbeitet, was den Nachteil hat, daß die Laugenproduktivität schlechter ist als bei Verwendung einer konzentrierten Lauge. Bei verdünnter Lauge muß mehr Flüssigkeit bearbeitet und umgewälzt werden als bei konzentrierter Lauge, was einen entsprechend größeren apparativen und fertigungstechnischen Aufwand bedingt und außerdem mehr Energie erfordert.

Es stellte sich somit die Aufgabe, die geschilderten Nachteile des Bayer-Verfahrens zu eliminieren und ein Verfahren zu finden, das die Erzeugung von grobkörnigem Aluminiumoxid-Hydrat ermöglicht, und zwar auch in konzentrierteren Mutterlaugen.

Zur Lösung der gestellten Aufgabe wird in der CA-A-10 98 284 vorgeschlagen, die Erzeugung der Produktkristalle und Impfkristalle unter verschiedenen Bedingungen in getrennten Ausrührern vorzunehmen. So soll in einer Produkt-Kaskade unter ständiger paralleler Zufuhr von frischer (noch nicht ausgerührter) übersättigter Mutterlauge in die einzelnen Ausrührer in Gegenwart von mittelgroben Impfkristallen im wesentlichen grobkristallines Tonerde-Hydrat hergestellt werden, und in einer Impfkaskade aus den parallel abgeführten Überläufen der Produkt-Kaskade feinkristallines Tonerde-Hydrat. Das Impfmaterial und das beim Durchlauf durch die Produkt-Kaskade gebildete Aluminiumoxid-Hydrat werden in Reihe durch die Ausrührer der Kaskade geführt. Wesentlich bei diesem Prozeß ist, daß in der Produkt-Kaskade in stark übersättigten Natriumaluminatlaugen hohe Feststoffkonzentrationen (Feststoff-Aluminiumhydroxid) vorliegen und bei Temperaturen von 75 bis 90 °C gearbeitet wird. Unter diesen Bedingungen überwiegt Kristallvergrößerung durch Kristallwachstum, Nukleation und Impfkristallbildung werden zurückgedrängt. Im Gegensatz hierzu wird in der Impfkaskade bei Temperaturen von 50 bis 65 °C die Bildung von feinkristallinem Aluminiumoxid-Hydrat in teilweise ausgerührten Natriumaluminatlaugen begünstigt.

Aus übersättigter Mutterlauge wird bei dem vorbekannten Verfahren grobkristallines Aluminiumoxid-Hydrat in Ausbeuten von 72 bis 85 g/l gewonnen, ausgedrückt als $Al_2O_3$. Das Produkt soll höchstens 1 % Kristalle enthalten, die kleiner als 45 μm sind.

Das in der übersättigten Natriumaluminatlauge enthaltene Natriumhydroxid liegt bei dem vorbekannten Verfahren in Mengen von 200 bis 300 g/l vor, insbesondere 240 g/l, ber. als $Na_2CO_3$.

Ein weiteres Kennzeichen des Verfahrens nach der CA-A-10 98 284 besteht darin, daß in der Produkt-Kaskade mit 3-Phasen-Ausrührern gearbeitet wird. In derartigen Ausrührern stellt die unterste Phase I eine Absetzzone mit hohem Feststoffgehalt (40 bis 65 %) dar, die mittlere Zone II die Ausrührzone mit einem Feststoffgehalt von 10 bis 20 % und die obere Zone III mit einem Feststoffgehalt von 1 bis 5 % eine Beruhigungszone. Die Phasenunterteilung, die mit Hilfe der dort beschriebenen Rührvorrichtung ohne Schwierigkeiten erzielbar ist, führt zwar zur Bildung von grobkristallinem Aluminiumoxid-Hydrat in konzentrierten Natriumaluminatlaugen (der NaOH-Gehalt liegt höher als beim amerikanischen Verfahren und liegt in etwa der gleichen Höhe wie bei dem europäischen Bayer-Verfahren), jedoch hat sich gezeigt, daß die verbesserte Laugen-Produktivität zur Lösung der gestellten Aufgabe noch nicht ausreicht. Ausrührzeiten von mindestens 50 Stunden werden in der Praxis vielfach als zu lang bezeichnet. Insbesondere wurde beobachtet, daß die gemäß dem angezogenen Stand der Technik erzeugten groben Hydrat-Kristalle weniger stabil sind und leicht zerbrechen, in vielen Fällen bereits im Fließbett des Kalzinierofens.

Aufgabe der vorliegenden Erfindung ist insbesondere die Herstellung grober Aluminiumoxid-Hydrat-Kristalle, die gegenüber Einwirkung mechanischer Kräfte weitgehend stabil sind und bei Beanspruchung, beispielsweise Transport widerstandsfähig sind. Außerdem besteht die gestellte Aufgabe darin, die Ausrührzeit zu verkürzen und die Laugenproduktivität zu verbessern.

Die Lösung der gestellten Aufgabe basiert auf der Erkenntnis, daß die mechanischen Eigenschaften grober Aluminiumoxid-Hydrat-Kristalle im hohen Maße von den Bedingungen beeinflußt werden, unter denen die Kristallvergrößerung stattfindet. Es hat sich überzeugend gezeigt, daß Aluminiumoxid-Hydrat-Kristalle, die vornehmlich durch Kristallwachstum entstanden sind, andere Eigenschaften aufweisen als Kristalle, die überwiegend durch Agglomeration oder Agglomeration und Kristallwachstum gebildet worden sind. Nur durch Kristallwachstum gebildete Aluminiumoxid-Hydrat-Teilchen zerbrechen leicht und werden bei dem Verfahren der CA-A-10 98 284 erhalten. Kristalle, die durch Agglomeration von Impfkristallen und anschließendes Kristallwachstum entstanden sind, sind wesentlich stabiler.

Das neue Verfahren zur Herstellung von grobkörnigen und stabilen Aluminiumoxid-Hydrat-Kristallen wird kontinuierlich ausgeführt und ist dadurch gekennzeichnet, daß

a. übersättigte Natriumaluminatlösung mit einer Natriumhydroxid-Konzentration von 200 bis 300 g/l, berechnet als $Na_2CO_3$, bei Temperaturen von 80 bis 65 °C durch eine Kaskade von hintereinander geschalteten Agglomeratoren geleitet und ein Teil des gelösten Aluminiumoxids als Aluminiumoxid-Hydrat ausgerührt wird, wobei in den ersten Agglomerator zusätzlich eine Suspension von feinen Impfkristallen eingeführt wird und der erste Agglomerator einen Feststoffgehalt von 10 bis 50 g/l, berechnet als $Al_2O_3$, aufweist,

b. die Agglomerate enthaltende Natriumaluminatlösung anschließend durch eine Kaskade von hintereinander geschalteten Kristallisatoren geleitet und ein Teil des Aluminiumhydroxids so ausgerührt wird, daß in jedem Kristallisator mindestens 80 % des Füllvolumens einen Feststoffgehalt von 300 bis 900 g/l und der Überlauf des restlichen Füllvolumens einen Feststoffgehalt nicht größer als 20 g/l, insbesondere nicht größer als 3 g/l, aufweisen, wobei Unterlauf und Überlauf jeweils erst nach Vermischung in den nächsten Kristallisator eingeführt werden,

c. die vereinigten Abläufe aus dem letzten Kristallisator, die aus dem Zulauf in den ersten Kristallisator und dem in der Kristallisator-Kaskade gebildetem Aluminiumoxid-Hydrat bestehen, auf eine Temperatur von 55 bis 45 °C abgekühlt werden und

d. in einer zweiten Kaskade von hintereinander geschalteten Kristallisatoren so ausgerührt werden, daß in jedem Kristallisator mindestens 80 % des Füllvolumens einen Feststoffgehalt von 300 bis 900 g/l und der Überlauf des restlichen Füllvolumens einen Feststoffgehalt nicht größer als 20 g/l, insbesondere nicht größer als 3 g/l aufweisen, und

e. die aus dem letzten Kristallisator der zweiten Kristall.-Kaskade abgezogene Kristall-Suspension in feine, gegebenenfalls auch mittelgrobe Impf- und grobe Produktkristalle fraktioniert wird.

Die Agglomeratoren sind die in der Tonerde-Industrie bekannten Standard-Ausrührer. Bei Temperaturen zwischen 80 und 65 °C, insbesondere 78 und 75 °C, findet in Anwesenheit von feinkristallinem Impfmaterial und einem A/C-Verhältnis (darunter versteht man das Verhältnis des gelösten Aluminiumoxids in Gramm je Liter zum gelösten Natriumhydroxid in Gramm je Liter, berechnet als $Na_2CO_3$) von etwa 0,700 bis 0,650, insbesondere 0,690 bis 0,660 im 1. Agglomerator und 0,550 bis 0,450, insbesondere 0,500 bis 0,490, im letzten Agglomerator, vornehmlich Agglomeratbildung statt. Die Größe der Impfkristallteilchen sollte im 1. Agglomerator bei 25 bis 60 % der Teilchen, insbesondere 35 bis 45 %, unterhalb 45 μm liegen, wobei hervorzuheben ist, daß die Impfkristallmenge mit 10 bis 50 g/l, insbesondere 15 bis 25 g/l, berechnet als $Al_2O_3$, sehr klein ist. Es hat sich gezeigt, daß die Impfkristallmenge in der Agglomerator-Kaskade nicht größer als etwa 52 g/l, berechnet als $Al_2O_3$, (oder etwa 80 g/l, berechnet als Hydrat) sein darf. Liegen größere Mengen vor, überwiegt das Kristallwachstum und die Agglomeratbildung kommt praktisch zum Stillstand.

Die Konzentration des Natriumhydroxids beträgt am Beginn und Ende der Agglomerator-Kaskade in der Natriumaluminatlösung 200 bis 300 g/l, insbesondere 240 bis 250 g/l, berechnet als $Na_2CO_3$. Die Verweilzeit in der Agglomerator-Kaskade kann 6 bis 10 Stunden sein, beträgt jedoch vornehmlich 7,5 bis 8,5 Stunden. Unter den angegebenen Bedingungen findet in den Agglomeratoren fast nur Agglomeratbildung statt. Ein wesentliches Merkmal des neuen Verfahrens besteht ferner darin, daß Natriumoxalat-Kristalle in der Lauge nicht anwesend sein dürfen. Durch Oxalatkristalle wird die Impfkeimbildung gefördert und die Agglomeratbildung gestört. Gemäß Siebanalyse liegen im Endprodukt der Agglomerator-Kaskade 80 bis 90 % Teilchen vor, die größer als 45 μm sind.

Erfindungsgemäß wird in der folgenden Kaskade (erste Kristallisator-Kaskade) die teilweise ausgerührte Natriumaluminatlauge in jedem Kristallisator so ausgerührt, daß mindestens 80 Vol. %, insbesondere 85 bis 90 Vol. % des Füllvolumens, einen hohen Feststoffgehalt aufweisen und der Überlauf des restlichen Füllvolumens einen Feststoffgehalt von höchstens 20 g/l, berechnet als $Al_2O_3$, aufweist. Mit besonderem Vorteil wird so gearbeitet, daß in dem Überlauf ein Feststoffgehalt von höchstens 3 g/l enthalten ist.

Ein Kennzeichen dieses Verfahrensschrittes besteht darin, daß in den Kristallisatoren ausschließlich Vergrößerung der in der Agglomerator-Kaskade gebildeten Agglomerat-Teilchen durch Kristallwachstum vorgesehen ist. Eine Impfkristallzugabe kann jedoch in der ersten Kristallisator-Kaskade zur Aufrechterhaltung eines konstanten Kristallbildungsgleichgewichtes zweckmäßig sein. Werden mittelgrobe Impfkristalle in den ersten Kristallisator zugegeben, so sollte die Menge zwischen 100 und 300 g/l, insbesondere zwischen 150 und 170 g/l, berechnet als Aluminiumoxid, liegen. 70 bis 90 % der Impfkristalle sollten größer als 45 μm sein, insbesondere 78 bis 83 %. Bei dieser Ausführungsform der Erfindung legt man die Dekanter zweckmäßiger Weise so aus, daß die gesamte mittelgrobe Kristallfraktion als Impfgut in der zweiten Kaskade eingesetzt wird und die feine Kristallfraktion als Impfgut in der Agglomerator-Kaskade. Wird in der ersten Kristallisator-Kaskade bei Temperaturen von 70 bis 69 °C im ersten Kristallisator und 68 bis 62 °C, insbesondere 65 °C, im letzten Kristallisator gearbeitet, werden Verweilzeiten von 7 bis 14 Stunden, insbesondere 8 bis 10 Stunden, für den Durchlauf der ersten Kristallisator-Kaskade benötigt. Je höher die Temperatur und der Übersättigungsgrad in dieser ersten Kristallisator-Kaskade sind, desto größer ist die Kristallisationsgeschwindigkeit. Agglomerator- und erste Kristallisator-Kaskade können demnach zum Unterschied zur zweiten Kristallisator-Kaskade auch als heiße Kaskade bezeichnet werden. Aus dem bereits angeführten Grunde sollten auch hier Natriumoxalat-Kristalle abwesend sein. Weder Impfkeimbildung noch Agglomeration ist vorgesehen.

Die Aluminiumoxid-Hydrat-Konzentration soll in dem unteren Teil der Kristallisatoren hoch sein. Sie kann zwischen 300 und 900 g/l liegen. Die Agglomeration läßt sich am besten unterbinden, wenn die untere Phase, « das Feststoffbett », einen großen Raum einnimmt und einen hohen Feststoffgehalt hat. Erfindungsgemäß umfaßt das « Feststoffbett » etwa 80 bis 85 Vol.% des Füllvolumens. Das A/C-Verhältnis, das bei Eintritt in die erste Kristallisator-Kaskade zwischen 0,550 und 0,450, insbesondere jedoch 0,500 und 0,490, liegt, vermindert sich bis zum Austritt aus dem letzten Kristallisator auf 0,430 bis 0,380, insbesondere 0,420. Der Feststoffgehalt beträgt bei mindestens 80 Vol. % der Suspension vorzugsweise 600 bis 700 g/l, ausgedrückt als Aluminiumoxid-Hydrat.

Die gesamte Ablaufmenge (Unter- und Überlauf) aus dem letzten Kristallisator der ersten Kristallisator-Kaskade ist gemäß Anspruch gleich der Einlaufmenge in den ersten Kristallisator, vermehrt um das in den Kristallisatoren gebildete, im wesentlichen aufgewachsene Aluminiumoxid-Hydrat. Die in den Kristallisatoren gebildeten Volumina mit unterschiedlichem Feststoffgehalt werden nach getrennter Entnahme aus den Kristallisatoren vor Einspeisung in den folgenden Kristallisator miteinander vermischt und anschließend erneut in Volumina mit hohem und sehr niedrigem Feststoffgehalt aufgetrennt. Von den aus dem letzten Kristallisator entnommenen Kristallen weisen gemäß Siebanalyse 88 bis 92 % der Teilchen eine oberhalb 45 μm liegende Größe auf.

Die aus dem letzten Kristallisator kommende Aluminiumoxid-Hydrat-Suspension wird vor Eintritt in die zweite Kristallisator-Kaskade auf eine Temperatur von 55 bis 45 °C abgekühlt, wobei als geeignete Abkühlungsaggregate sowohl Wärmeaustauscher als auch Entspannungskühler einsetzbar sind. Wie in der ersten Kristallisator-Kaskade findet auch in der zweiten Kristallisator-Kaskade vornehmlich Kristallwachstum statt, allerdings bei wesentlich tieferen Temperaturen und kleinerem A/C-Verhältnis. Eine Impfkristallzugabe ist in der kalten Kaskade nicht erforderlich. Die Verweilzeit in der 2. Kristallisator-Kaskade wird unter den vorgegebenen Bedingungen Zwischen 13 und 23 Stunden, liegen.

Das A/C-Verhältnis sollte bei Eintritt in die letzte Kaskade zwischen 0,430 und 0,380 liegen. Es beträgt vorzugsweise 0,420. Beim Verlassen der zweiten Kristallisator-Kaskade ist das A/C-Verhältnis auf 0,350 bis 0,320, vorzugsweise auf 0,340 bis 0,330, abgesunken. Die Austrittstemperatur wird mit 55 bis 45 °C, insbesondere 50 °C, angegeben. 90 bis 92 % der gebildeten Kristalle sind größer als 45 μm.

Es wird in diesem Zusammenhang hervorgehoben, daß die vorstehenden Ergebnisse nur erzielt werden, wenn gegebenenfalls in der Prozeßlauge vorhandene Verunreinigungen weitgehend entfernt worden sind. Reinigungsverfahren sind bekannt, z. B. in der DE-C-25 18 431 und anderen Druckschriften. Eine gereinigte Prozeßlauge enthält etwa noch folgende Verunreinigungen :

1. weniger als 0,05 g/l feste Oxalate, ausgedrückt als Natriumoxalat,

2. weniger als 110 mg/l Huminsäureabkömmlinge,

3. weniger als 8 g/l langkettige organische Verbindungen, ausgedrückt als Kohlenstoff,

4. weniger als 4 g/l anorganische Salze, ausgedrückt als $Na_2CO_3$, und

5. weniger als 10 % $Na_2CO_3$, bezogen auf das gelöste Natriumhydroxid in der Prozeßlauge.

Der Gegenstand der Erfindung wird nunmehr anhand von zwei Figuren noch näher erläutert.

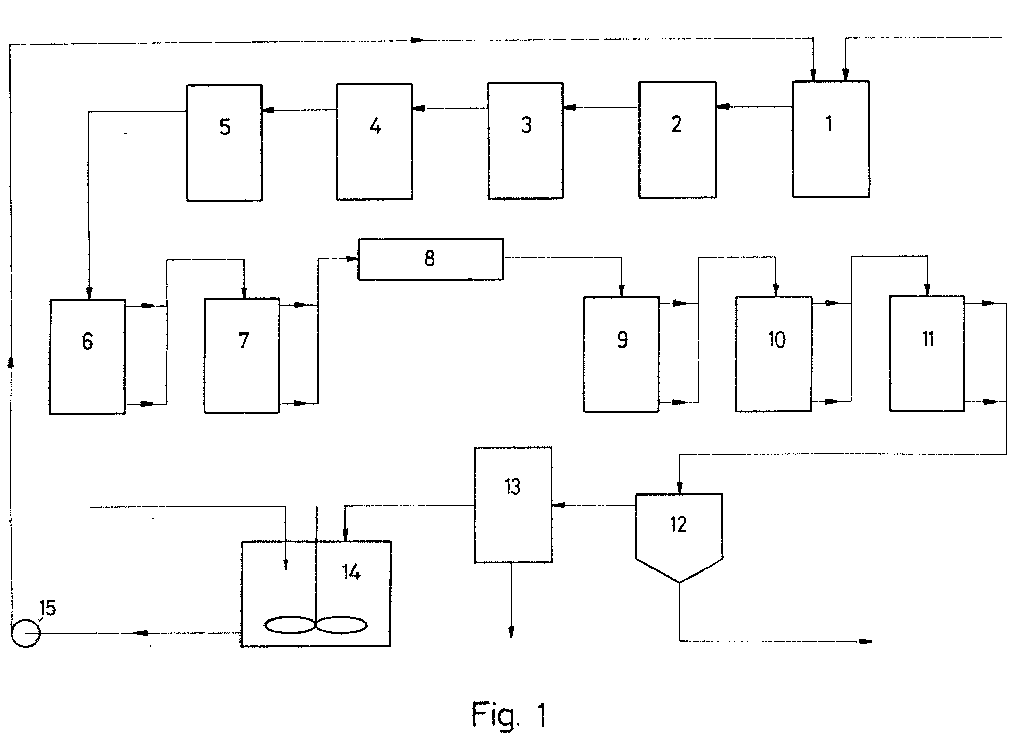

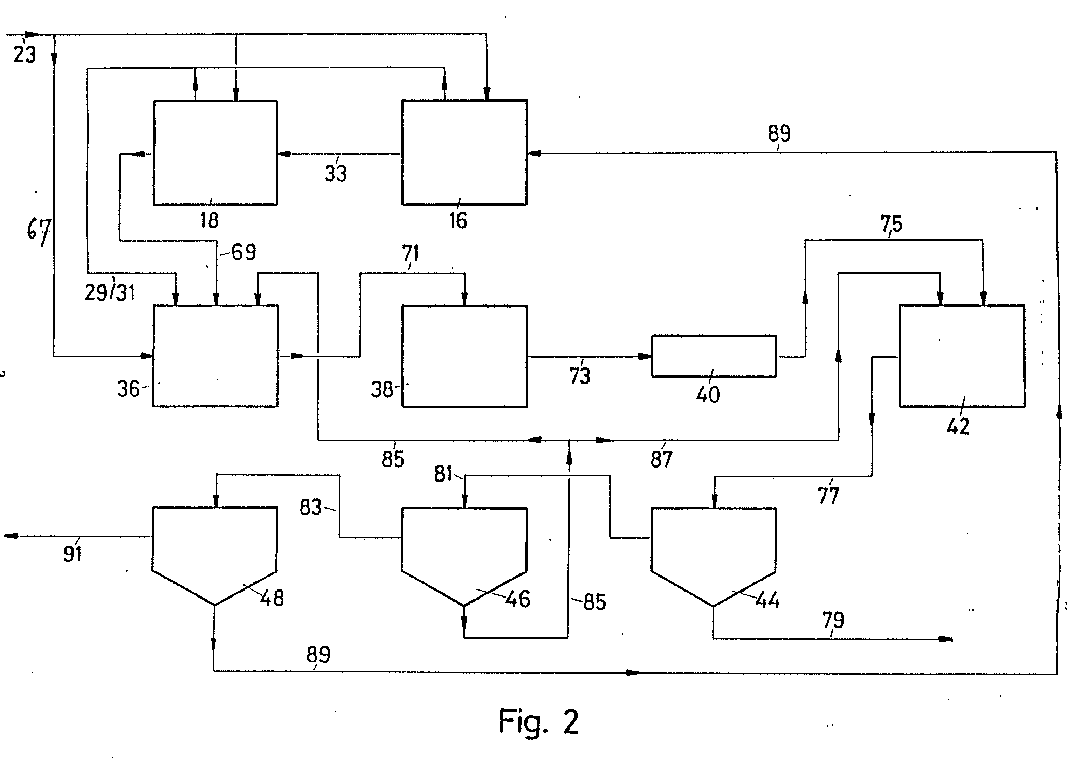

Figur 1 zeigt ein Fließschema des erfindungsgemäßen Verfahrens zur Herstellung von stabilen und gleichzeitig groben Aluminiumoxid-Hydrat-Kristallen, Fig. 2 ein Fließschema gemäß Stand der Technik zur Herstellung von grobkristallinem Aluminiumoxid-Hydrat, das jedoch nur eine geringe Festigkeit zeigt und im Kalzinierofen leicht zerschlagen wird. Selbstverständlich ist der Gegenstand der Erfindung nicht auf die in Fig. 1 gezeigte Ausführungsform beschränkt, die Anzahl der Agglomeratoren und Kristallisatoren kann auch kleiner oder größer sein.

Gemäß Fig. 1 wird heiße übersättigte Mutterlauge in den Agglomerator 1 der z. B. aus fünf Agglomeratoren bestehenden « heißen » Kaskade eingeführt. Die in den Agglomerator 1 aus dem Ausrührgefäß 14 mittels der Pumpe 15 eingeführte feine Impfkristallmenge beträgt 20 g/l, berechnet als $Al_2O_3$. Während in den Agglomeratoren 1 und 2 bei 78 °C und einem A/C-Verhältnis von 0,660 vornehmlich Nukleation stattfindet, werden in den folgenden Agglomeratoren vornehmlich Agglomerate gebildet, und zwar 40 g/l, sodaß die Suspension bei Austritt aus dieser Kaskade insgesamt 60 g Feststoff im Liter enthält, ausgedrückt als $Al_2O_3$. Beim Austritt aus dem letzten Agglomerator beträgt das A/C-Verhältnis 0,500, die Laugenkonzentration 250 g/l, ausgdrückt als $Na_2CO_3$.

Aus dem letzten Agglomerator tritt die Suspension mit dem angegebenen Feststoffgehalt, einem A/C-Verhältnis von 0,500 und einer Temperatur von 70 °C in den Kristallisator 6, an den der Kristallisator 7 angeschlossen ist. Die Kristallisatoren 6 und 7 bilden die erste Kristallisator-Kaskade (2. heiße Kaskade) des neuen Verfahrens. In der Praxis wird die Anzahl der Kristallisatoren höher liegen. Einfachheitshalber werden hier nur 2 angegeben. Die Verweilzeit in der Kaskade beträgt etwa 8 Stunden und die auskristallisierende Aluminiumoxid-Hydrat-Menge 20 g/l, ausgedrückt als $Al_2O_3$. Die aus der zweiten Kaskade bei 65 °C austretende Suspension enthält somit 80 g/l, berechnet als $Al_2O_3$. Das A/C-Verhälnis ist am Ende der Kaskade auf 0,420 abgesunken. In den Kristallisatoren 6 und 7 wird erfindungsgemäß so gearbeitet, daß mindestens 80 Vol. % des Füllvolumens einen hohen Feststoffgehalt aufweisen und das restliche Füllvolumen einen sehr niedrigen Feststoffgehalt. Der Feststoffgehalt im Überlauf soll nicht höher als 20 g/l, insbesondere nicht größer als 3 g/l, sein.

Nach Abkühlung der Suspension im Wärmeaustauscher 8 auf 55 °C erfolgt die weitere Ausrührung der Natrium-aluminatlauge in der zweiten Kristallisator-Kaskade, auch als « kalte » Kaskade bezeichnet. Sie besteht z. B. aus den drei Kristallisatoren 9, 10 und 11. In der Praxis kann diese Zahl varrieren. Der kombinierte Ablauf

aus dem Kristallisator 11 besitzt ein A/C-Verhältnis von 0,340 und einer Temperatur von 50 °C. Der Feststoffgehalt (ausgedrückt als $Al_2O_3$) beträgt 100 g/l. Demnach sind in der kalten Kaskade ebenfalls 20 g $Al_2O_3$/l gebildet worden, in allen 3 Kaskaden zusammen also 80 g/l. Die Verweilzeit in der 3. Kaskade liegt bei etwa 15 Stunden, die in der 2. Kaskade bei etwa 8 Stunden und die in der 1. Kaskade bei etwa 7 Stunden. Insgesamt werden also 30 Stunden benötigt.

Erfindungsgemäß wird der kombinierte Ablauf aus dem Kristallisator 11 in einem zweistufigen Verfahren getrennt, wobei die grobkörnigen Kristalle als Produkt in dem Dekanter 12 abgetrennt werden, während die feinkörnigen Kristalle als Impfkristalle dem Filter 13 entnommen und nach Vermischung mit Prozeßlauge in den Kreislauf rückgeführt werden. Aus dem Dekanter 12 werden 80 g als Produkt aus dem Prozeß herausgeführt. Wie bereits erwähnt, haben nur 8 bis 10 %, insbesondere 2 bis 5 % dieser Kristalle eine Korngröße kleiner als 45 µm. Nach der Kalzination liegt ein grobkörniges Aluminiumoxid vor, dessen Kristalle während der Kalzination nur unwesentlich beschädigt worden sind.

Aus den Angaben zu dem in Fig. 1 gezeigten Verfahren geht hervor, daß zur Erzeugung von 80 g grobem Aluminiumhydroxid, berechnet als $Al_2O_3$, 20 g feines Impfmaterial benötigt werden. Durch alle 3 Kaskaden zirkulieren demnach nur 20 g/l in den Prozeß rückgeführtes Impfmaterial. Die zirkulierende Impfkristallmenge ist sehr gering. Zur Erzeugung von 1 Tonne grobkristallinem Aluminiumoxid-Hydrat werden lediglich 0,25 t (20/80) feinkristallines Impfgut benötigt. Diese Impfmenge kann, wie sich gezeigt hat, innerhalb bestimmter Grenzen schwanken. So werden gute Ergebnisse noch erzielt, wenn pro Tonne erzeugtes Aluminiumoxid 0,2-1,0 t feines Impfgut zugesetzt werden.

Werden gemäß einer besonderen Ausführungsform in den ersten Kristallisator der orsten Kristallisator-Kaskade mittelgrobe Impfkristalle in den Prozeß rückgeführt oder eingeschleust, so sind Mengen von 100 bis 300 g/l, berechnet als $Al_2O_3$, vorteilhaft, insbesondere Mengen von 150 bis 170 g/l. 70 bis 90 % der mittelgroben Impfkristalle sollten größer als 45 µm sein.

Das in Fig. 2 gezeigte Fließschema beschreibt eine Ausführungsform des Verfahrens nach der CA-A-10 98 284, das mit dem erfindungsgemäßen Verfahren in mehreren Punkten vergleichbar ist. So wird in dieser Ausführungsform ebenfalls mit 3 Kaskaden gearbeitet und die aus der 2. Kaskade austretende Suspension vor Eintritt in die 3. Kaskade auf eine Temperatur von 65 bis 50 °C abgekühlt. Der wesentliche Unterschied zwischen den im Vergleich stehenden Verfahren der Fig. 1 und 2 besteht darin, daß bei dem Verfahren nach der Erfindung in der 1. Kaskade Agglomeratoren eingesetzt werden, hingegen bei dem vorbekannten Verfahren in der 1. Kaskade 3-Phasen-Ausrührer. Auch unterscheiden sie sich darin, daß die Ausrührer in der 2. und 3. Kaskade beim neuen Verfahren keine 3-Phasen-Ausrüher sind, sondern Kristallisatoren, in denen fast ausschließlich Kristallwachstum stattfindet und in denen mindestens 80 Vol. % des Füllvolumens einen sehr hohen Feststoffgehalt aufweisen.

In Fig. 2 wird über die Leitung 23 den 3-Phasen-Ausrührern 16 und 18 der Produkt-Kaskade (1. Kaskade) heiße, übersättigte Mutterlauge zugeführt und über die Leitung 89 Impfkristalle. Die Laugenkonzentration beträgt etwa 200 bis 300 g/l. Der Überlauf, d. h. die teilweise ausgerührte Lauge aus den Ausrührer der Produkt-Kaskade wird über die Leitung 29/31 in den ersten Ausrührer 36 der 2. Kaskade geführt, die ebenfalls aus einer Anzahl von Ausrührern, z. B. acht bis zwölf, aufgebaut ist. Eingezeichnet sind lediglich die beiden Ausrührer 36 und 38, die 3-Phasen-Ausrührer sein können. Dem ersten Ausrührer 36 dieser Kaskade wird ferner über eine von der Leitung 23 abzweigende Leitung 67 frische (noch nicht ausgerührte), heiße Mutterlauge zugeführt. Außerdem wird in den Ausrührer 36 über eine Leitung 69 der Kristallbrei eingeleitet, der aus dem letzten Ausrührer 18 der Produkt-Kaskade abgezogen wird. Diese Kristalle sind durch die Ausrührer 16 und 18 der Produkt-Kaskade, die in Reihe geschaltet sind, hindurchgeführt worden, während die teilweise ausgerührten Laugen aus den Ausrührern parallel abgeführt worden sind. Die Feststoff-Konzentration am Ausgang des Ausrührers 18 beträgt etwa 40 bis etwa 65 %. In den Ausrührer 36 werden ferner über eine Leitung 85 vom Boden des Dekanters 46 mittelgrobe Impfkristalle eingegeben. Die Suspension wird nun in den Ausrührern 36 und 38 weiter ausgerührt. Die gesamte Masse, d. h. die ausgerührte Lauge und die in ihr suspendierten Kristalle werden durch die hintereinander geschalteten Ausrührer 36 und 38 der Kaskade, die über Leitung 71 miteinander verbunden sind, hindurchgeführt. Die Lauge und die Kristalle verlassen den Ausrührer 38 durch eine Leitung 73. Das Lauge/Kristall-Gemisch wird durch den Wärmeaustauscher 40 geleitet und in diesem auf eine Temperatur von etwa 65 bis 50 °C gekühlt. Anschließend wird das Gemisch durch eine Leitung 75 in den Ausrührer 42 eingeleitet, der der erste Ausrührer einer weiteren Kaskade oder gegebenenfalls auch nur ein einziger Ausrührer ist. Der Einfachheit halber ist hier nur ein Ausrührer 42 dargestellt. Werden jedoch bei einer Kaskade mehrere Ausrührer hintereinandergeschaltet, so wird die gesamte Masse, d. h. Lauge und Kristalle durch die in Reihe geschalteten Ausrührer hindurchgeleitet und aus dem letzten Ausrührer abgezogen. In die Ausrührer 42, 36 und 38 werden ferner über eine Leitung 85 und Leitung 87 mittelgrobe Impfkristalle eingeleitet.

Das Gemisch wird in den Ausrührern 36, 38 und 42 ausgerührt und über die Leitung 77 in den ersten Dekantierer 44 eingeleitet. Aus dem Dekantierer 44 werden über die Leitung 79 grobe Kristalle als Produkt abgezogen, während der Überlauf über die Leitung 81 in einen zweiten Dekantierer 46 eingeführt wird. Aus dem Dekantierer 46 zieht man über die Leitung 85 mittelgrobe Impfkristalle ab, die, wie bereits erwähnt, den Ausrührern 36 und 42 zugeführt werden. Der Überlauf aus dem Dekantierer 46 wird über die Leitung 83 in den dritten Dekantierer 48 eingeführt. Aus dem Dekantierer 48 werden über die Leitung 89 feine Impfkristalle abgezogen und in den ersten Ausrührer 16 der Produkt-Kaskade eingegeben. Der Überlauf des Dekantierers 48 wird über die Leitung 91 zum Autoklaven (Bauxitaufschluß) rückgeführt. Die Temperatur in der aus den Ausrührern 36 und 38 gebildeten Kaskade liegt wie bei der Produkt-Kaskade bei etwa 90 bis 75 °C, wobei sie in Flußrichtung von dem oberen Wert auf den unteren Wert abfällt. Die Temperatur im Ausrührer 42 liegt bei etwa 65 bis 50 °C, vorzugsweise bei etwa 60 bis 55 °C. Die Menge an Impfkristallen, die in den ersten Ausrührer 16 der Produkt-Kaskade eingeführt wird, liegt bei etwa 30 bis etwa 200 g/l. (Die Mengen bzw. Gewichtsangaben bezüglich der Impfkristalle und der Lauge beziehen sich auf einen Liter des Gesamtgemisches).

Das A/C-Verhältnis der in den Ausrührer 16 eingeführten Mutterlauge beträgt etwa 0,660, der NaOH-Gehalt, berechnet als $Na_2CO_3$, 240 g/l und der Gehalt an Aluminiumoxid-Hydrat, berechnet als $Al_2O_3$, 157,4 g/l. Die in den Behälter 16 eingespeiste feine Impfkristallmenge beträgt 36 g/l. Bei Austritt aus dem Ausrührer 18 liegt die Aluminiumoxid-Hydrat-Konzentration, berechnet als $Al_2O_3$, bei 121,4 g/l. Entstanden sind also in der Produkt-Kaskade 36 g/l. Die teilweise ausgerührte Natrium-Aluminat-Lösung, die mit 121,4 g $Al_2O_3$/l in den 1. Ausrührer der 2. Kaskade eingespeist wird, verläßt den letzten Ausrührer dieser Kaskade mit einem $Al_2O_3$-Gehalt in g/l von 99,4 (A/C-Verhältnis = 0,414). Aus dem Ausrührer 42 der dritten Kaskade tritt eine ausgerührte Lauge mit einem Gehalt an Aluminiumoxid-Hydrat von 77,4 g/l, berechnet als $Al_2O_3$ über die Leitung 77 in den Dekantierer 44. Das A/C-Verhältnis ist gleich 0,322. Insgesamt sind bei dem vorbekannten Verfahren also ebenfalls 80 g/l Aluminiumoxid-Hydrat-Kristalle gebildet worden.

Für die Beurteilung der im Vergleich stehenden beiden Verfahren ist — wie gezeigt — die Menge an erzeugten Aluminium-Hydrat-Kristallen in Gramm pro Liter ohne Bedeutung. Der technische Fortschritt des neuen Verfahrens ergibt sich aus der verkürzten Zeit zur Erzeugung der groben Kristalle. Die Produktionszeit kann um 30 bis 40 % der beim Verfahren nach der kanadischen Patentschrift erforderlichen Zeit gesenkt werden. Außerdem kann die zirkulierende Impfkristallmenge wesentlich herabgesetzt werden, sodaß geringere Mengen rezirkuliert werden und der apparative Aufwand geringer ist. Auch sind die nach dem neuen Verfahren hergestellten Kristalle wesentlich stabiler, was eine weitere wichtige Aufgabe des neuen Verfahrens ist.

**Patentansprüche**

1. Kontinuierliches Verfahren zur Extraktion von Aluminiumoxid aus Bauxit nach dem Bayer-Verfahren, bei welchem eine übersättigte Natriumaluminatlösung durch Naßaufschluß von gemahlenem Bauxit mit Natriumhydroxid gebildet und das Aluminiumoxid-Hydrat in Gegenwart von Impfkristallen grobkörnig ausgefällt wird, dadurch gekennzeichnet, daß

a. übersättigte Natriumaluminatlösung mit einer Natriumhydroxid-Konzentration von 200 bis 300 g/l, berechnet als $Na_2CO_3$, bei Temperaturen von 80 bis 65 °C durch eine Kaskade von hintereinander geschalteten Agglomeratoren geleitet und ein Teil des gelösten Aluminiumoxids als Aluminiumoxid-Hydrat ausgeführt wird, wobei in den ersten Agglomerator zusätzlich eine Suspension von feinen Impfkristallen eingeführt wird und der erste Agglomerator einen Feststoffgehalt von 10 bis 50 g/l, berechnet als $Al_2O_3$, aufweist,

b. die Agglomerate enthaltende Natriumaluminatlösung anschließend durch eine erste Kaskade von hintereinander geschalteten Kristallisatoren geleitet und ein Teil des Aluminiumhydroxids so ausgeführt wird, daß in jedem Kristallisator mindestens 80 % des Füllvolumens einen Feststoffgehalt von 300 bis 900 g/l und der Überlauf des restlichen Füllvolumens einen Feststoffgehalt nicht größer als 20 g/l, insbesondere nicht größer als 3 g/l, aufweisen, wobei Unterlauf und Überlauf jeweils erst nach Vermischung in den nächsten Kristallisator eingeführt werden,

c. die vereinigten Abläufe aus dem letzten Kristallisator, die aus dem Zulauf in den ersten Kristallisator und dem in der ersten Kristallisator-Kaskade gebildetem Aluminiumoxid-Hydrat bestehen, auf eine Temperatur von 55 bis 45 °C abgekühlt werden und

d. in einer zweiten Kaskade von hintereinander geschalteten Kristallisatoren so ausgeführt werden, daß in jedem Kristallisator mindestens 80 % des Füllvolumens einen Feststoffgehalt von 300 bis 900 g/l und der Überlauf des restlichen Füllvolumens einen Feststoffgehalt nicht größer als 20 g/l insbesondere nicht größer als 3 g/l aufweisen, und

e. die aus dem letzten Kristallisator der zweiten Krist.-Kaskade abgezogene Kristall-Suspension in feine, gegebenenfalls auch mittelgrobe Impf- und grobe Produktkristalle fraktioniert wird.

2. Verfahren nach Anspruch 1, dadurch gekennzeichnet, daß die feinen Impfkristalle in der Agglomerator-Kaskade in Mengen von 10 bis 50 g/l, berechnet als $Al_2O_3$, eingesetzt werden und 25 bis 60 % der Kristalle, insbesondere 35 bis 45 %, eine Teilchengröße unterhalb 45 μm aufweisen.

3. Verfahren nach Anspruch 2, dadurch gekennzeichnet, daß die feinen Impfkristalle in Mengen von 15 bis 25 g/l, berechnet als $Al_2O_3$, eingesetzt werden.

4. Verfahren nach den Ansprüchen 1 bis 3, dadurch gekennzeichnet, daß die Natriumaluminatlösung die Agglomerator-Kaskade in 6 bis 10 Stunden durchläuft.

5. Verfahren nach den Ansprüchen 1 bis 4, dadurch gekennzeichnet, daß die Natriumaluminatlösung die Agglomerator-Kaskade bei einer Temperatur von 78 bis 75 °C durchläuft.

6. Verfahren nach den Ansprüchen 1 bis 5, dadurch gekennzeichnet, daß die Natriumaluminatlösung die Kaskade mit einem A/C-Verhältnis von 0,700 bis 0,650 im ersten Agglomerator und 0,550 bis 0,450 im letzten Agglomerator durchläuft.

7. Verfahren nach den Ansprüchen 1 bis 6, dadurch gekennzeichnet, daß der Ablauf aus der Agglomerator-Kaskade die erste Kristallisator-Kaskade bei Temperaturen von 70 bis 62 °C durchläuft.

8. Verfahren nach den Ansprüchen 1 bis 7, dadurch gekennzeichnet, daß der Ablauf aus der Agglomerator-Kaskade die erste Kristallisator-Kaskade in 7 bis 14 Stunden durchläuft.

9. Verfahren nach den Ansprüchen 1 bis 8, dadurch gekennzeichnet, daß die Natriumaluminatlösung die erste Kristallisator-Kaskade mit einem A/C-Verhältnis von 0,430 bis 0,380, insbesondere 0,420 verläßt.

10. Verfahren nach den Ansprüchen 1 bis 9, dadurch gekennzeichnet, daß in jedem Kristallisator mindestens 80 % des Füllvolumens mit einem Feststoffgehalt von 300 bis 900 g/l, berechnet als Aluminiumhydroxid, enthalten sind.

11. Verfahren nach den Ansprüchen 1 bis 10, dadurch gekennzeichnet, daß der Ablauf aus dem letzten Kristallisator der Kaskade in einem Wärmeaustauscher abgekühlt wird.

12. Verfahren nach den Ansprüchen 1 bis 11, dadurch gekennzeichnet, daß die abgekühlte Kristallsuspension die anschließende zweite Kaskade von Kristallisatoren in 13 bis 23 Stunden durchläuft.

13. Verfahren nach den Ansprüchen 1 bis 12, dadurch gekennzeichnet, daß die Natriumaluminatlösung die zweite Kristallisator-Kaskade mit einem A/C-Verhältnis von 0,350 bis 0,320 verläßt.

14. Verfahren nach den Ansprüchen 1 bis 13, dadurch gekennzeichnet, daß in den ersten Kristallisator der ersten Kristallisator-Kaskade mittelgrobe Impfkristalle in Mengen von 100 bis 300 g/l, berechnet als $Al_2O_3$, eingespeist werden.

15. Verfahren nach Anspruch 14, dadurch gekennzeichnet, daß in den ersten Kristallisator der ersten Kristallisator-Kaskade mittelgrobe Impfkristalle in Mengen von 150 bis 170 g/l, berechnet als $Al_2O_3$, eingespeist werden.

16. Verfahren nach den Ansprüchen 14 und 15, dadurch gekennzeichnet, daß mittelgrobe Impfkristalle eingesetzt werden, von denen 70 bis 90 % größer als 45 μm sind.

**Claims**

1. Continuous process for the extraction of alumina from bauxite by the Bayer process, in which a supersaturated sodium aluminate solution is formed by wet decomposition of ground bauxite with sodium hydroxide and the hydrous aluminium oxide is precipitated in coarse grained manner in the presence of seed crystals, characterized in that

a. supersaturated sodium aluminate solution with a sodium hydroxide concentration of 200 to 300 g/l, calculated as $Na_2CO_3$, is passed at temperatures of 80 to 65 °C through a cascade of succeeding agglomerators and part of the dissolved alumina is stirred out as hydrous aluminium oxide, whereby into the first agglomerator is additionally introduced a suspension of fine seed crystals and the first agglomerator has a solids content of 10 to 50 g/l, calculated as $Al_2O_3$,

b. the sodium aluminate solution containing the agglomerates is then passed through a first cascade of successive crystallizers and part of the aluminium hydroxide is stirred out in such a way that in each crystallizer at least 80 % of the filling volume has a solids content of 300 to 900 g/l and the overflow of the remaining filling volume has a solids content no greater than 20 g/l and particularly no greater than 3 g/l, the underflow and overflow only being introduced into the next crystallizer after mixing.

c. the combined outflows from the last crystallizer comprising the inflow into the first crystallizer and the hydrous aluminium oxide formed in the first crystallizer cascade are cooled to a temperature of 55 to 45 °C,

d. in a second cascade of successively arranged crystallizers stirring out takes place in such a way that in each crystallizer at least 80 % of the filling volume has a solids content of 300 to 900 g/l and the overflow of the remaining filling volume a solids content no greater than 20 g/l, particularly no greater than 3 g/l and

e. the crystal suspension drawn off from the last crystallizer of the second crystallizer cascade is fractionated into fine and optionally also moderately coarse seed crystals and coarse product crystals.

2. Process according to claim 1, characterized in that the fine seed crystals are introduced into the agglomerator cascade in quantities of 10 to 50 g/l, calculated as $Al_2O_3$, and 25 to 60, particularly 35 to 45 % of the crystals have a particle size below 45 μm.

3. Process according to claim 2, characterized in that the fine seed crystals are used in quantites of 15 to 25 g/l, calculated as $Al_2O_3$.

4. Process according to claims 1 to 3, characterized in that the sodium aluminate solution passes through the agglomerator cascade in 6 to 10 hours.

5. Process according to claims 1 to 4, characterized in that the sodium aluminate solution passes through the agglomerator cascade at a temperature of 78 to 75 °C.

6. Process according to claims 1 to 5, characterized in that the sodium aluminate solution passes through the cascade with an A/C ratio of 0.700 to 0.650 in the first agglomerator and 0.550 to 0.450 in the last.

7. Process according to one of the claims 1 to 6, characterized in that the outflow from the first agglomerator cascade passes through the first crystallizer cascade at temperatures of 70 to 62 °C.

8. Process according to claims 1 to 7, characterized in that the outflow from the first agglomerator cascade passes through the first crystallizer cascade in 7 to 14 hours.

9. Process according to claims 1 to 8, characterized in that the sodium aluminate solution leaves the first crystallizer cascade with an A/C ratio of 0.430 to 0.380, particularly 0.420.

10. Process according to claims 1 to 9, characterized in that each crystallizer contains at least 80 % of the filling volume with a solids content of 300 to 900 g/l, calculated as aluminium hydroxide.

11. Process according to claims 1 to 10, characterized in that the outflow from the last crystallizer of the cascade is cooled in a heat exchanger.

12. Process according to claims 1 to 11, characterized in that the cooled crystal suspension passes through the second cascade of crystallizers in 13 to 23 hours.

13. Process according to claims 1 to 12, characterized in that the sodium aluminate solution leaves the second crystallizer with an A/C ratio of 0.350 to 0.320.

14. Process according to claims 1 to 13, characterized in that moderately coarse seed crystals in quantities of 100 to 300 g/l, calculated as $Al_2O_3$, are fed into the first crystallizer of the first crystallizer cascade.

15. Process according to claim 14, characterized in that moderately coarse seed crystals in quantities of 150 to 170 g/l, calculated as $Al_2O_3$, are fed into the first crystallizer of the first crystallizer cascade.

16. Process according to claims 14 and 15, characterized in that moderately coarse seed crystals are used, where of 70 to 90 % are larger than 45 μm.

**Revendications**

1. Procédé continu d'extraction d'oxyde d'aluminium de la bauxite selon le procédé Bayer, consistant à constituer une solution sursaturée d'aluminate de sodium par désagrégation par voie humide de bauxite moulue avec de l'hydroxyde de sodium et à précipiter en gros grains l'hydrate d'oxyde d'aluminium en présence de germes, caractérisé par les pas suivants :

a. la solution sursaturée d'aluminate de sodium avec une concentration d'hydroxyde de sodium de 200 à 300 g/l, calculée $Na_2CO_3$ est conduite à travers une cascade d'agglomérateurs connectés l'un à la suite de l'autre, à une température de 80 à 65 °C, et une partie de l'oxyde d'aluminium dissous est précipitée par agitation sous forme d'hydrate d'oxyde d'aluminium, une suspension de germes fins étant ajoutée dans le premier agglomérateur, ce premier agglomérateur présentant une teneur en produit solide de 10 à 50 g/l, calculé en $Al_2O_3$ ;

b. la solution d'aluminate de sodium contenant des agglomérats est conduite ensuite à travers une première cascade de cristallisateurs connectés l'un derrière l'autre et une partie de l'hydroxyde d'aluminium est précipitée par agitation de telle sorte que dans chaque cristallisateur au moins 80 % du volume de remplissage présente une teneur en produit solide de 300 à 900 g/l et que le trop-plein du volume de remplissage restant présente une teneur en produit solide non supérieure à 20 g/l, en particulier non supérieure à 3 g/l, l'écoulement inférieur et le trop-plein étant introduits à chaque fois seulement après mélange, dans le prochain cristallisateur,

c. les écoulements réunis du dernier cristallisateur, qui sont constitués du flux entrant dans le premier cristallisateur et de l'hydrate d'oxyde d'aluminium formé dans la première cascade de cristallisateurs, sont refroidis à une température de 55 à 45 °C et

d. sont précipités par agitation dans une deuxième cascade de cristallisateurs connectés l'un derrière l'autre, de telle manière que dans chaque cristallisateur au moins 80 % du volume de remplissage présente une teneur en produit solide de 300 à 900 g/l et que le trop-plein du volume de remplissage restant présente une teneur en produit solide non supérieure à 20 g/l, en particulier non supérieure à 3 g/l, et

e. la suspension de cristaux retirée du dernier cristallisateur de la deuxième cascade de cristallisateurs est fractionnée en germes et en cristaux de production fins, le cas échéant également moyennement grossiers.

2. Procédé selon la revendication 1, caractérisé en ce que les germes fins sont introduits dans la cascade d'agglomérateurs en des quantités égales à 10 à 50 g/l calculées sous forme d'$Al_2O_3$ et que 25 à 60 % des cristaux, en particulier 35 à 45 %, présentent une granulométrie inférieure à 45 µm.

3. Procédé selon la revendication 2, caractérisé en ce que les germes fins sont introduits en des quantités égales à 15 à 25 g/l, calculées sous forme d'$Al_2O_3$.

4. Procédé selon les revendications 1 à 3, caractérisé en ce que la solution d'aluminate de sodium traverse la cascade d'agglomérateurs en 6 à 10 heures.

5. Procédé selon les revendications 1 à 4, caractérisé en ce que la solution d'aluminate de sodium traverse la cascade d'agglomérateurs à une température de 78/75 °C.

6. Procédé selon les revendications 1 à 5, caractérisé en ce que la solution d'aluminate de sodium traverse la cascade avec un rapport A/C de 0,700 à 0,650 dans le premier agglomérateur et 0,550 à 0,450 dans le dernier agglomérateur.

7. Procédé selon les revendications 1 à 6, caractérisé en ce que l'écoulement de la cascade d'agglomérateurs traverse la première cascade de cristallisateurs à une température de 70 à 62 °C.

8. Procédé selon les revendications 1 à 7, caractérisé en ce que l'écoulement de la cascade d'agglomérateurs traverse la première cascade de cristallisateurs en 7 à 14 heures.

9. Procédé selon les revendications 1 à 8, caractérisé en ce que la solution d'aluminate de sodium quitte la première cascade de cristallisateurs avec un rapport A/C égal à 0,430 à 0,380, en particulier 0,420.

10. Procédé selon les revendications 1 à 9, caractérisé en ce que dans chaque cristallisateur au moins 80 % du volume de remplissage sont contenus avec une teneur en produit solide de 300 à 900 g/l, calculée sous forme d'hydroxyde d'aluminium.

11. Procédé selon les revendications 1 à 10, caractérisé en ce que l'écoulement du dernier cristallisateur de la cascade est refroidi dans un échangeur de chaleur.

12. Procédé selon les revendications 1 à 11, caractérisé en ce que la suspension de cristaux refroidie traverse ensuite la deuxième cascade de cristallisateurs en 13 à 20 heures.

13. Procédé selon les revendications 1 à 12, caractérisé en ce que la solution d'aluminate de sodium quitte la deuxième cascade de cristallisateurs avec un rapport A/C de 0,350 à 0,320.

14. Procédé selon les revendications 1 à 13, caractérisé en ce que des germes moyennement grossiers sont introduits dans le premier cristallisateur de la première cascade de cristallisateurs en une quantité égale à 100 à 300 g/l, calculée en tant que $Al_2O_3$.

15. Procédé selon la revendication 14, caractérisé en ce que des germes moyennement grossiers sont introduits dans le premier cristallisateur de la première cascade de cristallisateurs en une quantité égale à 150/170 g/l calculée en tant que $Al_2O_3$.

16. Procédé selon les revendications 14 et 15, caractérisé en ce que 70 à 90 % des germes moyennement grossiers introduits sont de grosseur supérieure à 45 µm.

Fig. 1

Fig. 2